Europäisches Patentamt

European Patent Office

Office européen des brevets

(11) Publication number: **0 322 996 B1**

# EUROPEAN PATENT SPECIFICATION

(45) Date of publication of patent specification: **10.06.92**  (51) Int. Cl.5: **A23L 1/16**, A23L 1/182, A23L 3/34

(21) Application number: **88306253.1**

(22) Date of filing: **08.07.88**

(54) **Cooked and packaged starchy foodstuffs.**

(30) Priority: **31.12.87 US 140208**

(43) Date of publication of application:
**05.07.89 Bulletin 89/27**

(45) Publication of the grant of the patent:
**10.06.92 Bulletin 92/24**

(84) Designated Contracting States:
**AT BE CH DE ES FR GB GR IT LI LU NL SE**

(56) References cited:
**EP-A- 0 192 354      EP-A- 0 239 656
FR-A- 2 130 906      US-A- 4 495 214
US-A- 4 552 772      US-A- 4 659 576**

**Patent Abstracts of Japan, vol. 11, no. 3
(C-395) (2450) 7 January 1987; & JP-A-61
181350 (Kanebo Shokuhin K.K.) 14.08.1986**

(73) Proprietor: **Borden, Inc.
180 East Broad Street
Columbus Ohio 43215(US)**

(72) Inventor: **Lee, Yanien
8260 Thimblerock Circle
Manlius New York(US)**
Inventor: **Merritt, Carleton George
1350 W. River Road
Phoenix New York(US)**
Inventor: **Gillmore, Stephen Russell
2500 Maple Avenue
Cato New York(US)**
Inventor: **Dermody, Nancy Elizabeth
104 Fireside Lane
Camillus New York(US)**

(74) Representative: **Wilkinson, Stephen John et al
Stevens, Hewlett & Perkins 1 St. Augustine's
Place
Bristol BS1 4UD(GB)**

EP 0 322 996 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Field of the Invention

This invention is directed to packaged fully cooked meals which are preserved against microbiological spoilage, methods for producing such packaged meals, and the ready-to-eat meals that may be so packaged. More particularly, this invention is directed to packaged fully cooked, starchy foodstuffs which are stabilized against spoilage at room temperature by reducing the pH to acidic levels.

Background of the Invention

Reducing the pH of food products by the addition of an edible acid to preserve against microbiological spoilage is well known. Such a method for preserving food is often referred to as "pickling" or "acid preservation". This method of preservation is common for uncooked foods such as olives, cucumbers, peppers and other raw vegetables. This method is well suited for foods where a tart flavor is desired, such as pickles, salad dressings, relishes and the like.

The preservation of starchy foodstuffs by the addition of an edible acid has been accomplished. Although enhanced shelf-stability is obtained, there are drawbacks. Foodstuffs so preserved exhibit a tart, sour taste due to the presence of the acid. This is acceptable for some food preparations such as cold pasta and potato salads with dressings having an acidic pH. It is recognised that to expand the versatility of acid-preserved starchy foodstuffs, the sour taste contributed by the acid used must be avoided.

For example, Tiberio et al., U.S. Patent 4,477,478, teaches the use of fumaric acid in combination with acetic acid to preserve dressings for salad having a lower perceived tartness. In addition, Saitoh et al., U.S. Patent 4,552,772, disclose the use of salt with citric or lactic acid to improve the palatability of cooked, acid-preserved, wheat flour based, alimentary pastes. Although an improvement in taste is alleged, Saitoh et al. admit the product exhibits a detectable sourness, although weakened, at column 4, line 15 of the patent.

Edible acids have also been used in the preparation of other types of foodstuffs. For instance, US-A-4659576 describes the incorporation of an edible acid into conventional raw alimentary paste. The raw paste produced is packaged and may be storage stable for up to 8 weeks in a refrigerator. The paste, however, has to be cooked before it is ready to eat. FR-A-2130906 teaches a process wherein rice is partially cooked in acidified water, drained, mixed with an oil/water emulsion, packaged and sterilized. The rice product is made ready-to-eat by immersing it in boiling water for 1 minute.

It remains desirable to provide an acid-preservation system for cooked starchy foodstuffs, particularly alimentary pastes, rice and potatoes, while avoiding, minimizing or overcoming the sour taste of the acid utilized.

SUMMARY OF THE INVENTION:

There is provided by this invention (1) a packaged shelf-stable, fully cooked meal, (2) a ready-to-eat meal obtained from such package, and (3) a method for producing a packaged, shelf-stable, fully cooked, starchy foodstuff.

In one embodiment, the package of a shelf-stable, fully cooked meal of this invention comprises 2 containers. A primary container isolates a preserved food composition sealed therein from atmospheric oxygen. This preserved food composition comprises a shelf-stable, fully cooked, starchy foodstuff and an edible acid that is uniformly dispersed in this primary container with said foodstuff, in a quantity which provides shelf-stability, said quantity preferably provides a pH for the starchy foodstuff of from 3.5 to 4.6. A secondary container isolates the contents therein from the preserved food composition. The contents of the secondary container comprise an edible alkaline neutralizing agent in a quantity sufficient upon mixing with the starchy foodstuff to increase its pH to a value in the range of from 5 to 7.

The ready-to-eat meal provided by this invention comprises an admixture of (1) a shelf-stable, fully cooked, starchy foodstuff which is shelf-stabilized with an edible acid, which preferably has a pH with a value in the range of from 3.5 to 4.6 provided by the edible acid and (2) an edible alkaline neutralizing agent in a quantity sufficient to increase the pH of the starchy foodstuff to a value in the range of from 5 to 7.

The process of this invention for producing a packaged, shelf-stable, fully cooked, starchy foodstuff comprises first preparing a starchy foodstuff for packaging by:

(a) heating the starchy foodstuff in boiling water, steam or combinations thereof until fully cooked, the quantity of water/steam being sufficient to provide the desired moisture level in the starchy foodstuff,

2

(b) adding a quantity of an edible acid to the fully cooked, starchy foodstuff sufficient to provide shelf-stability, wherein said edible acid preferably provides a pH for the starchy foodstuffs in the range of from 3.5 to 4.6,

(c) mixing the edible acid and fully cooked, starchy foodstuff to distribute the edible acid on the foodstuff, and

(d) mixing an edible lubricant with the mixture of edible acid and starchy foodstuff, wherein the edible lubricant has a melting point below about 95°F (35°C) and is used in a quantity up to about 15% by weight, based on the weight of the total package contents.

A container is then filled with the thus prepared starchy foodstuff, sealed to exclude atmospheric oxygen and the contents of said container are then aseptically packaged, i.e., they are sterilized or pasteurized once packaged or are maintained under sterile or pasteurized conditions during packaging. The container isolates its contents from atmospheric oxygen and is resistant to wet heat at a temperature above about 180°F (82°C). "Wet heat" refers to the condition of high temperatures (above about 180°F) (82°C) and high humidity (above about 85% RH). Such conditions are present within a steam tunnel or within a vessel of boiling water.

DETAILED DESCRIPTION OF THE PREFERRED EMBODIMENTS:

The starchy foodstuffs suitable for use in this invention include grains, potatoes, starchy legumes and alimentary pastes. Preferably, the starchy foodstuff has a porous surface and is selected from grains, alimentary pastes and potatoes. Examples of preferred grains include rice, barley and wheat. The starchy foodstuffs used in the present invention must be in an edible state, prepared for consumption by the removal of any hard, inedible shell by peeling, pearling or other means. Of the grains, rice is more preferred.

Of the alimentary pastes, virtually any paste obtained from a glutinous flour is suitable for use in the embodiments of this invention. Examples of suitable glutinous flours include semolina flour, durum wheat flour, corn flour, buckwheat flour, farina flour and whole wheat flour. Their pastes all exhibit porous surfaces. Pastes obtained from rice flour, a nonglutinous flour, are also suitable, especially if the starch is gelatinized or partially gelatinized.

Potatoes that have been cut and/or peeled so as to expose porous surfaces are suitable for use. Any variety of potato may be used in the present invention.

The starchy foodstuff used is fully cooked so that it may be eaten as is from its container directly off the shelf or heated to the desired temperature. Heating the starchy foodstuff to cause it to absorb additional moisture, gelatinize additional starch, or denature additional protein is not required. Each of these phenomena may occur upon heating, but is of no consequence to this invention.

When fully cooked, alimentary pastes generally have a moisture content of from 65% to 85% by weight. Fully cooked rice generally has a moisture content of from 60% to 70% by weight and fully cooked potatoes generally have a moisture content of from 70% to 80% by weight. These values for moisture levels are provided as guides only. The fully cooked, starchy foodstuffs used in the present invention are not limited to species having these moisture levels.

The packaged starchy foodstuffs of the present invention are shelf-stable. The term "shelf-stable", as used herein, indicates that the foodstuff is stabilized against spoilage by microbiological growth at room temperature for a period of not less than 1 week. Preferably, the starchy foodstuffs are preserved against microbiological spoilage for a period of 6 months or more. To achieve shelf-stability, an edible acid is admixed with the starchy foodstuff. The pH of the starchy foodstuff is reduced to acidic levels of preferably from 3.5 to 4.6 with the edible acid.

Starch foodstuffs are not inherently acidic, so it is necessary to add an edible acid, i.e. one which can be ingested without harmful effect. Suitable acids include acetic acid, citric acid, tartaric acid, hydrochloric acid, malic acid, propionic acid, adipic acid, fumaric acid, phosphoric acid, lactic acid, sorbic acid, benzoic acid and mixtures thereof. Certain acids may be preferred because of their effectiveness. The quantity of edible acid added to the starchy foodstuff is preferably sufficient to provide a pH within the range described above. Most preferred pH values fall in the range of from 4.0 to 4.3.

To be effective, the edible acid is distributed in a substantially uniform manner so as to retard the growth of molds, bacteria and yeasts which cause spoilage. The acid may be diluted to aid distribution. It is preferably that the acid penetrate into the surface of the starchy foodstuffs, which is why porous starchy foodstuffs are preferred. For example, rice which has been acid preserved has been found to have a shelf life of more than 9 months at room temperature.

The package of a shelf-stable, fully cooked meal provided by one preferred embodiment of this invention comprises 2 containers. One of these containers is a primary container and serves to isolate a pasteurized food composition sealed therein from atmospheric oxygen. This preserved composition comprises a fully cooked, starchy foodstuff preserved with an edible acid. The edible acid is uniformly distributed within the preserved food composition and is preferably used in a quantity which provides a pH for the starchy foodstuff in the range of from 3.5 to 4.6. This can be accomplished by adding and mixing a quantity of edible acid to the fully cooked, starchy foodstuff or by immersing the fully cooked, starchy foodstuff in a volume of diluted acid and weighing the volume of diluted acid both before and after immersion to determine the quantity of acid absorbed.

The preserved food composition may contain a mixture of fully cooked, starchy foodstuffs, shelf-stable foods other than starch foodstuffs, and other components such as vegetable oil for lubrication, water to aid acid dispersion, preservatives for added shelf life, seasonings or sauces for flavor, vitamin and mineral supplements, etc. The addition of these ingredients is optional.

The primary container must be comprised of a material having good oxygen barrier properties. Such materials include metals, glass, some synthetic resins, some resin coated papers or foils, and combinations thereof. Suitable containers include metal cans, glass jars, paper/metal foil pouches, some selected synthetic resin pouches, and suitably coated paper cartons. Metal cans or paper/foil pouches have high resistance to oxygen permeation, as do glass jars. However, such packages are undesirable for use in microwave ovens in that they reflect microwave energy. Synthetic resins generally do not reflect a significant amount of microwave energy and provide the advantage of convenience where the foodstuff is to be heated. However, synthetic resins generally have less desirable barrier properties to oxygen when compared to glass or metal.

Barrier properties of synthetic resins differ, and some resins must be modified to provide suitable barrier properties. Vapor barrier properties of synthetic resins can be enhanced by incorporating barrier resistant particles such as glass, minerals or metals in fiber, flake or particle form. Some synthetic resins are suitable without modification such as, for example, polyethylene terephthalate (medium and high density), polypropylene terephthalate (low density), polyvinylidene chloride (Saran), and polyamides.

Where a synthetic resin is selected for use in providing a container for the shelf-stable, fully cooked meal, the vapor barrier properties of the container may usually be enhanced by increasing the thickness of the container wall. The thickness of the wall for a container comprised of a synthetic resin preferably is in the range from 2 mils to 5 mils (50.8 to 127 $\mu$m). Such a container provides a reasonable resistance to puncture during handling and permits effective heat sealing of the pouch. Where the synthetic resin desired will not provide the desired barrier properties within this thickness range, thin layers of material with higher barrier properties can be added to help maintain the container thickness in this range. In a preferred embodiment, polyester pouches such as polyethylene terephthalate are used having a wall thickness of from 2 to 4 mils (50.8 to 101.6 $\mu$m). Since polyethylene terephthalate has good oxygen barrier properties, it may also be used in a laminate with a base film layer that may be cheaper but is not a good oxygen barrier.

To isolate the preserved food composition from atmospheric oxygen, air must first be excluded prior to sealing the container. This can be accomplished by applying vacuum and/or compressing the container to evacuate air or by incorporating an inert atmosphere within the container such as nitrogen, carbon dioxide, or water vapor. Alternatively, water vapor may be generated from the container prior to and during sealing of said container so as to exclude a significant portion of atmospheric oxygen. A vacuum forms in the sealed container once the water vapor condenses upon cooling. Such a method is preferred in that it need not require a separate processing step where the contents of the container are sufficiently hot to generate adequate water vapor.

To complete the package of the shelf-stable, fully cooked meal provided by this invention, a second container is required which substantially isolates its contents from the preserved food composition. The contents of the second container comprise an edible alkaline neutralizing agent. The quantity of this alkaline neutralizing agent is matched with the quantity of edible acid within the primary container so that upon mixing, the pH of the fully cooked, starchy foodstuff is raised to a value in the range of from 5 to 7 when mixed. Suitable alkaline neutralising agents comprise edible alkali metal carbonates, such as sodium bicarbonate, sodium carbonate, potassium bicarbonate and potassium carbonate. These alkaline neutralizing agents are preferably encapsulated in inert fillers, fats or oils. Suitable fats and oils include dehydrated butterfat or palm oil and suitable inert fillers include edible salts. The alkaline neutralizing agent and encapsulant are preferably in solid, dry powder form so as to prevent the growth of microorganisms and to prevent loss of the encapsulated alkaline neutralizing agent by reaction with water. The contents of the second container are preferably in solid, dry form, so that the container need not exhibit the oxygen barrier properties required of the primary container. Preferably, however, the second container isolates its contents

4

from moisture and humidity.

Other ingredients may be included in the second container along with the alkaline neutralizing agent and encapsulant, provided these ingredients are shelf-stable. Such additional ingredients will more commonly be seasonings, such as, for example, salt, dehydrated cheese, dried bread crumbs, dried onions, dried chives and the like. Conventional preservatives such as propylene glycol, sodium benzoate, etc. may also be introduced.

The contents of the primary container must be pasteurized or sterile. This can be accomplished by maintaining the fully cooked, starchy foodstuff and other components under pasteurized conditions or sterile conditions until sealed within the primary container. Maintaining the fully cooked, starchy foodstuff at a temperature above about 180°F (82°C) until packaged will generally provide a pasteurized food composition. Higher temperatures are necessary to provide a sterile food composition. Alternatively, or in addition to maintaining the fully cooked, starchy foodstuff under pasteurized or sterile conditions, the contents of the primary container may be sterilized or pasteurized by any conventional means after sealing. For example, pasteurization can be achieved by heating the contents of the primary container to a temperature above about 180°F (82°C) by treatment of the sealed primary container with steam or boiling water. For sterilization, the contents are heated to a temperature of about 212°F (100°C) and above. Pasteurizing is preferred in that its effect on taste and texture of the food composition is minimized. Alternative methods of pasteurizing or sterilizing the contents of the primary container without radiant heat include treatment with microwave radiation and/or UV radiation.

A package of a shelf-stable, fully cooked mean will preferably have a shelf life greater than 1 month and more preferably will be shelf-stable for a period of at least about 6-9 months. It should be noted that a longer shelf life may be obtained by sterilizing the contents of the primary container, or by adding conventional food preservatives, such as, for example, propylene glycol, sodium benzoate and the like.

A further embodiment of the present invention is directed to a ready-to-eat meal comprising an admixture which comprises a fully cooked, starchy foodstuff selected from the group consisting of alimentary pastes, grains and potatoes. This fully cooked, starchy foodstuff is shelf-stabilized by preservation with an edible acid. Suitable edible acids include those described above for the package of a shelf-stable, fully cooked meal. Prior to incorporation into the admixture, this shelf-stable starchy foodstuff preferably exhibits a pH value in the range of from 3.5 to 4.6, most preferably about 4.3, due to the presence of the edible acid.

Also included in the admixture is a quantity of edible alkaline neutralizing agent, generally sufficient to neutralize at least 40% by weight of the edible acid, but in any case sufficient to provide a pH having a value in the range of from 5 to 7 for the fully cooked, starchy foodstuff within the admixture.

The ready-to-eat meals are distinguished from the packaged meals of this invention in that the edible neutralizing agent is combined with the preserved food composition in the ready-to-eat meals but the edible neutralizing agent remains isolated from the preserved food composition in the packaged meals. Therefore, the condition of the ready-to-eat meals will be a neutralized starchy foodstuff having a pH in the range of 5-7. When in such a condition, the meal is considered "ready-to-eat."

Suitable edible neutralizing agents include sodium bicarbonate, potassium bicarbonate, sodium carbonate and potassium carbonate. The starchy foodstuffs used in the ready-to-eat meals are preferably rice and alimentary pastes. The preferred edible acids are propionic acid and lactic acid.

It is important to note that the admixture may contain other components such as sauces (cheese, egg/cream), vegetables, seasonings (salt, garlic, onion, chives), oils, foodstuffs other than the starchy foodstuffs selected above (mushrooms, meats, vegetables) which are common to ready-to-eat meals. In addition, this ready-to-eat meal may be heated, maintained at ambient temperature or chilled, where desired. The additional ingredients may be premixed with either the edible alkaline neutralizing agent or the fully cooked, starchy foodstuff. Alternatively, the additional ingredients may be mixed simultaneously with or subsequently to the admixture of these primary components.

The ready-to-eat meals provided by this invention may be obtained from a package of a shelf-stable, fully cooked meal provided by this invention and described above. However, it is important to note that these ready-to-eat meals may be obtained by utilizing components which are not packaged or are packaged by alternative means and methods.

A further embodiment of the present invention is directed to processes for producing packaged, shelf-stable, fully cooked, starchy foodstuffs. The starchy foodstuffs utilized in this process are those previously defined as preferred, i.e., those selected from the group consisting of alimentary pastes, grains and potatoes. Of these starchy foodstuffs, rice and alimentary pastes are most preferred.

The package produced by the process of the present invention contains an edible acid and an edible lubricant in addition to the starchy foodstuffs therein. Suitable edible acids are those as defined previously.

5

Preferred edible acids include propionic acid and lactic acid.

The edible lubricant within the package produced by this process must have a melting point below about 95°F (35°C) to provide the desired function of preventing the fully cooked, starchy foodstuff from sticking and forming a solid mass. Preferably, below about 15% by weight edible lubricant is used, based on the total weight of the package contents. This weight limit prevents the finished product from becoming too greasy and unpalatable. Preferred quantities of edible oil generally range from 1% to 8% by weight of the total package contents. Suitable edible lubricants include corn oil, unsaturated safflower oil, palm oil, olive oil, peanut oil, coconut oil, sunflower oil and solid fats such as butterfat.

The process of this invention comprises preparing a starchy foodstuff for packaging by heating it in boiling water, steam or combinations of both until it is fully cooked. Cooking the starchy foodstuff increases its moisture content and thereby increases its tenderness. The degree of tenderness for a fully cooked, starchy foodstuff varies, depending upon personal tastes. The term "fully cooked", as used herein, is intended to include all degrees of tenderness commonly desired for ready-to-eat starchy foodstuffs. For example, with respect to alimentary pastes, those pastes cooked to provide a soft surface texture and a hard, firm center commonly referred to as "aldente" are included within the term "fully cooked", as well as those pastes which are cooked to a soft texture throughout, providing maximum moisture levels and maximum tenderness. In the case where the starchy foodstuff is an alimentary paste obtained from semolina flour the heating step in the process is preferably carried out until a moisture level of from 75 to 85% by weight is obtained. In the case where the starchy foodstuff is rice, the heating step is preferably carried out until a moisture level of from 60 to 70% by weight is achieved.

The quantity of water and steam utilized to cook the starchy foodstuff must be sufficient to provide the desired tenderness. Excess quantities of water can be utilized. However, when excess water is used, the starchy foodstuff must be drained, often resulting in product loss. It is preferable to avoid draining the fully cooked, starchy food product.

To this fully cooked, starchy foodstuff is added an edible acid in a predetermined quantity sufficient to provide shelf-stability, said quantity preferably provides a pH having a value in the range of from 3.5 to 4.6. Suitable quantities of acid generally range from 0.01% to 1.5% by weight acid based on the weight of fully cooked, starchy foodstuff. The most preferred pH is one having a value of from 4.0 to 4.3.

The edible acid and fully cooked, starchy foodstuff are agitated so as to disperse the acid on the surface of the cooked foodstuff. The pH values for the starchy foodstuffs herein are determined by first mincing the starchy foodstuff, or a sample thereof, in distilled water to form a slurry or puree and then measuring the pH of the resultant slurry or puree. Adequate slurries can be obtained for 50gm samples of starch foodstuff with 50gm of distilled water from a Waring blender in operation for about 1 minute and longer. In obtaining the desired pH, porous foodstuffs such as rice, potatoes and alimentary pastes absorb the edible acid beneath their surfaces. This is a beneficial phenomenon in that it typically enhances shelf-stability.

Agitation of the edible acid and foodstuff is preferably sufficiently mild to preserve the integrity of the foodstuff's shape and form. It is undesirable to cut, grind or mince the foodstuff during agitation. Therefore, agitation equipment which provides the desired dispersion without damaging the shape of the foodstuff is preferred. Examples include ribbon type mixers, and the like. Where a ribbon mixer is used, agitation of from 1 to 3 minutes is suitable.

To the agitated acidified, fully cooked, starch foodstuff is added an edible lubricant in a quantity as described above. Agitation of the acidified, fully cooked, starch foodstuff and the edible lubricant is not essential; however, to obtain the most beneficial effect, agitation is preferred.

It should be recognized that further steps in preparing the starch foodstuff for consumption are suitable, such as marination, frying, blending and seasoning, etc., provided these added treatments do not interfere with shelf-stability. Other components may be added if they are shelf-stable, such as food preservatives.

The starchy foodstuff thus prepared for packaging is sealed within a container so as to exclude atmospheric oxygen. The container must be resistant to wet heat in excess of 180°F (82°C) to permit subsequent processing and to accept the prepared starchy foodstuff when said foodstuff is hot from cooking. Those containers described above as suitable for packages of fully cooked meals provided by this invention are also suitable for use in the process described herein. Containers of glass, metal and synthetic resins are acceptable with preferred containers being comprised of synthetic resins, particularly polyesters (polyethylene terephthalate). As with the packages provided by this invention, the preferred thickness for these pouches ranges from 2 mils to 4 mils (50.8 to 101.6 μm)

Air must be excluded from the container prior to sealing. This can be accomplished by any conventional means such as applying vacuum or incorporating an inert atmosphere such as nitrogen, carbon dioxide or water vapor within the container. Generating a water vapor from the fully cooked starchy foodstuff within the container is preferred in that a separate processing step is not needed where the prepared starchy foodstuff remains hot from the cooking steps.

The contents of the packages produced by the process herein are pasteurized or sterile. This condition may be achieved by exposing the contents to sterilization processes and/or pasteurization processes subsequent to sealing the container. For example, pasteurization can be accomplished by heat treatment of the sealed packages with steam vapor or by immersion in hot water at a temperature above about 180°F (82°C). By utilizing higher temperatures, sterilization is achieved. Alternative methods for providing a sterile or pasteurized condition include treatment with UV radiation and microwave radiation.

A convenient method for achieving a pasteurized sterile condition is to maintain the prepared starchy foodstuff under pasteurized/sterile conditions after cooking until sealed in the container. Cooking the starchy foodstuff in boiling water, steam or combinations of both will pasteurize or sterilize it, depending on the temperature used. This condition can be retained by maintaining the foodstuff at a sufficiently high temperature after cooking until it has been sealed in an aseptic container. The preferred temperature range is from 180°F (82°C) to 210°F (98°C), which provides a pasteurized condition. To insure against growth of microorganisms the contents of the aseptic container may be subjected to a pasteurization step or sterilization step after sealing.

The packaged, shelf-stable, fully cooked, starchy foodstuffs produced by the process of this invention will have a shelf life greater than 1 month and typically greater than 6 months. Shelf life may be extended by selecting particular acids, incorporating food preservatives within the fully cooked, starchy foodstuff, and/or by sterilizing the contents of the sealed package.

The following examples are provided to further illustrate the invention. In these examples and throughout the specification, all temperatures are expressed in degrees Fahrenheit and each value is accompanied by an approximation of such value in degrees Celsius. All pH values for the starchy foodstuff, described in the examples and the claims which follow are measured from slurries of 50 gm samples of these starchy foodstuffs with distilled water obtained after mincing the 50gm starchy foodstuff samples in a Waring blender for about one minute. In addition, all parts and percentages are by weight, unless expressly indicated to be otherwise.

Examples 1-4

Long Term Stability of Several Packaged, Cooked, Starchy Foodstuffs

These examples demonstrate the long term stability of packaged, fully cooked, starchy foodstuffs prepared in accordance with one preferred embodiment of the process of this invention. The packages produced were suitable for use in the ready-to-eat meals provided by this invention and also the packaged meals provided by this invention.

The starchy foodstuffs in Examples 1-4 were prepared by boiling in excess water until fully cooked. Rice was boiled for approximately 12 to 14 minutes to achieve a final moisture content of about 72% to 75% by weight. Elbow macaroni having a size of about 1" (2.54 cm) in length and 3/8" (0.95 cm) in diameter was boiled 6 to 7 minutes to achieve a final moisture content of about 68% to 72%. Egg noodles of 1 1/2" (3.8 cm) in length and 1/16" (1.59 mm) thickness were boiled for 7 to 9 minutes to achieve a final moisture content of about 66% to about 70% by weight. The excess water was drained after these cooking times.

Edible acids diluted in water to an acid water ratio of about 1:10 were then added to the fully cooked, starchy foodstuffs. For rice, about 0.9% by weight lactic acid and about 0.027% by weight propionic acid were added, based on the weight of starchy foodstuff. For elbow macaroni, about 1.0% by weight lactic acid and about 0.030% by weight propionic acid were added, based on the weight of starchy foodstuff. For the egg noodles, about 1.1% by weight lactic acid and about 0.033% by weight propionic acid were added, based on the weight of starchy foodstuff.

After the addition of acid, agitation of the components was accomplished within a ribbon-type mixer for 1 to 3 minutes. During mixing, corn oil was added in all examples to minimize sticking. To rice, about 8% by weight corn oil, based on the dry weight of rice, was added. For elbows, about 6% by weight corn oil was added, based on the dry weight of elbows, and for egg noodles, about 7% by weight corn oil was added, based on the dry weight of egg noodles. After the addition of corn oil, mixing continued in the ribbon mixer for about 1 to 3 minutes. The temperature of each starchy foodstuff was maintained above 180°F (82°C) in preparation for sealing within polyester pouches.

About 200g to about 250g of each of the starchy foodstuffs were filled in 6 1/2" (16.5 cm) by 8" (20.3 cm), 2 mil (50.8 $\mu$m) polyethylene terephthalate polyester pouches. These pouches were heat sealed and passed through a steam saturation tunnel to raise or maintain the internal temperature to about 180°F (82°C) or above within each pouch.

```
                              TABLE I

                          Stability Tests

          Samples  of  the  packaged  foodstuffs  produced  in
     Examples  1-4  were  evaluated  for  storage  stability
     (bacterial growth) and the results are reported below.
```

|           |          |              | Storage Time in Months | |
|-----------|----------|--------------|--------------|--------------|
|           | Starch   |              | 86°F         | 86°F         |
| Example   | Food-    | $RT^a/$      | (30°C)       | (30°C)       |
| No.       | Stuff    | 30% $RH^b$   | 30% RH       | 85% $RH^b$   |
| 1         | Elbow Macaroni | 9      | –            | –            |
| 2         | Elbow Macaroni | 9      | 9            | 9            |
| 3         | Rice     | 9            | 9            | 9            |
| 4         | Egg Noodles | 9         | 9            | 9            |

a RT is room temperature.

b RH is relative humidity.

Bacterial growth was monitored over the course of 9 months. The total plate count for samples taken from Examples 2 and 3 above was found to decrease from 102 colonies to 80 colonies per gram after 8 weeks storage at 86°F (30°C), indicating microbiological growth was still inhibited at this time. The total plate count was acceptable after 9 months. The starchy foodstuffs were found to have the same acceptable flavor and texture after storage for 9 months as when first packaged. Beyond 9 months, microbiological spoilage was inhibited but taste, flavor and texture were found to deteriorate.

Example 5

Package of Acid/Rice Admixture Low End of the pH Range

This example demonstrates the stability of packages produced by this invention where the starchy foodstuff has a pH near the low end of the range of suitable values. Packages of fully cooked rice were produced by heating water (about 26.5 pounds (12 kg)) with about 200g oil to a boil in a jacketed kettle, adding rice (about 11 pounds (5 kg) par-boiled rice) and returning the water to a boil. After 12 minutes, the heat was turned off, the kettle covered, and the rice was allowed to stand in the hot water for about 3 minutes. The kettle was filled with more hot water and stirred with a spoon.

The excess water was drained and the cooked rice (about 29.5 pounds (13.4 kg)) was transferred to a ribbon mixer. A solution of diluted lactic acid (55g acid + 550g water) was added and mixed in the ribbon mixer followed by the addition of 600g corn oil. The oil and rice were mixed until the oil was uniformly dispersed.

About 59 pouches were each filled with about 220g to 230g of the rice/acid/oil mixture and sealed. The pouches were then heated in a steam chamber for about 9 minutes or until an internal temperature of at least 180°F (82°C) was reached. The pH of the rice in a sample pouch was found to be 3.62 utilizing the following procedure: a 50gm sample of rice was obtained from the pouch, blended with an equal amount of distilled water in a Waring blender for 1 minute and the pH of the resultant slurry was measured with a pH meter. Conventional pH meters such as a Corning pH meter and Beckman pH meter were used. To test for shelf stability, 4 bags were placed in 86°F (30°C)/85% RH for 1 week and no sign of microbiological growth was observed at the end of that time.

Example 6

Package of Acid/Rice Admixture High End of the pH Range

This example demonstrates the stability of packages produced by this invention where the starchy foodstuff has a pH near the high end of the range of suitable values. Packages of fully cooked rice were produced by heating 19.25 pounds (8.7 kg) of water with 200g corn oil in a Groen kettle to a boil and adding 11.0 pounds (5 kg) rice. After 9.5 minutes of boiling, the heat was turned off and the kettle covered. After an additional 6 minutes with no stirring, the rice was transferred to a Ribbon-Type Mixer. The rice was mixed with dilute acid (55g of 85% lactic acid + 300g water) and about 600g corn oil. Individual pouches were filled with 230±10g of the rice/oil/acid mixture. All pouches were heated treated for 9 minutes in a steam chamber. The heat treated pouches were exposed to 86°F (30°C)/85% RH for about 1 week. The pH of the treated rice within a sample pouch was about 4.65, as measured by the procedure of Example 5. No spoilage was observed at the end of 1 week.

Example 7

Package of Acid/Rice Admixture Without a Sterilization Or Pasteurization Step

This example demonstrates that a separate sterilization or pasteurization step is not necessary in the process of this invention if the starchy foodstuff is maintained pasteurized/sterile after cooking. Individual packages produced in accordance with Example 6 were exposed to 86°F (30°C)/85% RH for 1 week without heat treatment in a steam chamber. The pH of the treated rice within a sample pouch was about 4.20 after 1 week as measured by the procedure of Example 5. No spoilage resulted in these pouches.

Control A

Packages of Acid/Rice Admixtures Neutralized to a pH Below 5

This control demonstrates the importance of neutralizing the starchy foodstuff to a pH above 5 to obtain acceptable flavor. Packages of fully cooked rice were prepared by bringing 21.0 pounds (9.5 kg) of water to a rapid boil in a Groen kettle, adding about 11.0 pounds (5 kg) of rice (parboiled rice) and 176.0g of mixing oil (Centrafry) and returning the water to a boil. After 9.5 minutes, the heat was turned off and the rice was allowed to stand for 10 minutes with stirring at 3 minutes intervals. The cooked rice was transferred to a Secomak tumbler and agitated. Dilute lactic acid (100g 85% lactic acid + 450g water) was quickly added followed by lubricant (600g Centrafry oil + 24g lecithin). Fifteen pouches were each filled with the rice/acid/oil mixture (about 220g), sealed, and heat pasteurized in a steam chamber. The contents of sampled pouches had a pH value of about 3.86, as measured by the procedure of Example 5, and a moisture level of about 60% by weight. Three bags were placed in 86°F (30°C)/85% RH for about 1 week. The total plate count (bacteria) after the 1 week was less than 10.

Two 50g samples of rice were taken from a sample package and neutralized by adding water (100g) and mixing 15g and 30g, respectively, of a blend of seasoning and the neutralizing agent described below. The neutralizing agent was mixed with seasoning in a 30:1 weight ratio of seasoning to neutralizing agent. Mixing proceeded for about 1 minute. The final pH was about 4.90 and 4.48 for the meals having 30g seasoning/neutralizing agent and 15g seasoning/neutralizing agent, respectively. The final pH was determined by forming a slurry of rice sample with distilled water with a Waring blender and measuring the pH of the slurry. The taste of each 50g sample was distinctively sour.

Neutralizing Agent

The neutralizing agent was a food grade encapsulated sodium bicarbonate provided by SCM® Durkee Industrial Foods under the trademark Durkote® sodium bicarbonate 135-70. The sodium bicarbonate is coated with vegetable oil so as to not react or release prematurely.

This encapsulated sodium bicarbonate is designed to be used in combination with food acids in dry mix baking and other chemically leavened products where it is desired to delay and control the reaction of an acid and the encapsulated sodium bicarbonate. The encapsulation process provides the formulator with the ability to engineer a consistent quality product. According to product specifications of Durkee Industrial Foods, this particular encapsulated sodium bicarbonate comprises about 70% by weight anhydrous sodium bicarbonate (substrate) and about 30% by weight partially hydrogenated palm oil (coating). This Durkote® encapsulated sodium bicarbonate 135-70 is packed in 100 pound (45.3 kilogram) polyethylene lined fiber drums and is stable at temperatures below 80°F in odor free environments.

Example 8

Packages of Acid/Rice Admixture Neutralized to a pH Above 5

This example illustrates that acceptable flavor is obtained where the starchy foodstuff is neutralized to a pH above 5. Packages of fully cooked rice were prepared by bringing about 21.0 pounds (9.5 kg) of water to a rapid boil in a Groen kettle, adding 11.0 pounds (5 kg) of rice (parboiled) with about 176g of oil (Centrafry) and returning the water to a boil. The heat was shut off after 9.5 minutes and the rice was allowed to stand for about an additional 10 minutes with stirring at 3 minute intervals. After standing, the cooked rice was transferred to a ribbon-type mixer. Dilute acid (67g 85% lactic acid and 300g water) was sprayed on to the rice to enhance dispersion. Lubricating oil (about 600g Centrafry oil and 24g lecithin) was immediately poured over the rice.

Individual pouches were each filled with about 220±10 g of the rice/oil/acid mixture, sealed while the mixture was still hot (about 180°F (82°C)), and heat pasteurized in a steam chamber at a temperature above 180°F (82°C) for 10 minutes or more. The pH of the cooked rice was sampled in 4 bags and found to be 4.38, 4.47, 4.36 and 4.38, respectively, following the procedures described in Example 5 for pH measurement. The moisture level for the rice in the pouches was approximately 59.7% by weight. Samples of rice (about 220g) were obtained from each pouch and neutralized with a blend of seasoning and the neutralizing agent described above in the following amounts.
(1) 10g of a blend having a 30:1 seasoning to neutralizing agent weight ratio;
(2) 20g of a blend having a 30:1 seasoning to neutralizing agent weight ratio;
(3) 20g of a blend having a 20:1 seasoning to neutralizing agent weight ratio; and
(4) 10g of a blend having a 10:1 seasoning to neutralizing agent weight ratio.
Upon neutralization, the above samples (1-4) were found to have the following pH values: 5.66, 5.19, 6.23 and 6.49, respectively, utilizing the pH measurement procedures described in Example 5. All samples exhibited good taste with no objectionable sourness. These data suggest that 13g of seasoning to 1g of sodium bicarbonate is the preferred level for the packaged, fully cooked, starch foodstuffs of Example 8.

## Claims

1. A shelf-stable, fully cooked packaged meal comprising
   (a) a primary sealed container which substantially isolates its contents from atmospheric oxygen, said contents being a preserved food composition comprised of
      (i) a fully cooked starchy foodstuff selected from alimentary pastes, grains, starchy legumes and potatoes; and
      (ii) an edible acid uniformly dispersed in said primary container with said foodstuff in a quantity sufficient to provide shelf-stability; and
   (b) a secondary container which substantially isolates its contents from said preserved food composition, the contents within said secondary container comprising an edible alkaline neutralizing agent in a quantity sufficient to increase the pH of said foodstuff upon mixing therewith to a value in the range of from 5 to 7, following storage;
   wherein said edible alkaline neutralizing agent is sufficiently reactive at ambient temperature to increase the pH of said foodstuff upon mixing therewith to a value in the range of from 5 to 7 for consumption, within a short time after mixing;
   wherein the pH of the starchy foodstuff is determined by mincing about a 50 gram sample of said starchy foodstuff in a blender for about 1 minute with about 50 grams of distilled water to form a puree and measuring the pH of the puree with a pH meter.

2. A packaged meal according to claim 1, wherein the quantity of edible acid provides a pH for said starchy foodstuff in the range of from 3.5 to 4.6.

3. A packaged meal according to claim 1 or claim 2, wherein said foodstuff is selected from rice and alimentary pastes prepared from flours selected from semolina flour, durum wheat flour, corn flour, buckwheat flour, farina flour, rice flour, whole wheat flour, and mixtures thereof.

4. A packaged meal according to any one of claims 1 to 3, wherein the edible acid is selected from acetic acid, citric acid, tartaric acid, propionic acid, hydrochloric acid, fumaric acid, adipic acid, benzoic acid, malic acid, phosphoric acid, lactic acid, sorbic acid and mixtures thereof.

5. A packaged meal according to claim 4, wherein the edible acid is selected from propionic acid and lactic acid.

6. A packaged meal according to any one of claims 1 to 5, wherein the preserved food composition additionally comprises an edible lubricant in an amount of less than 15% by weight, which edible lubricant is selected from unsaturated safflower oil, peanut oil, coconut oil, palm oil, sunflower oil, corn oil, olive oil and combinations thereof.

7. A packaged meal according to claim 6, wherein the edible lubricant is present in an amount of from 1 to 8% by weight based on the total weight of the preserved food composition.

8. A packaged meal according to any one of claims 1 to 7, wherein the edible alkaline neutralizing agent is selected from sodium bicarbonate, sodium carbonate, potassium bicarbonate and potassium carbonate.

9. A packaged meal according to claim 8, wherein the edible alkaline neutralizing agent is encapsulated in a dehydrated fat or a dehydrated oil.

10. A packaged meal according to any one of claims 1 to 9, wherein the primary sealed container is a pouch formed of a synthetic resin.

11. A packaged meal according to claim 1, comprising
    (a) a polyester pouch which substantially isolates the contents from atmospheric oxygen, said contents being a preserved food composition comprised of
        (i) a fully cooked starchy foodstuff selected from rice, alimentary pastes obtained from semolina flour and combinations thereof,
        (ii) an edible acid uniformly dispersed in said polyester pouch selected from propionic acid, lactic acid and combinations thereof, in a quantity sufficient to provide a pH for said foodstuff having a value in the range of from 4.0 to 4.3, and
        (iii) from 1% to 8% by weight vegetable oil, based on the total weight of the preserved food composition, uniformly dispersed in said polyester pouch,
    (b) a secondary container which substantially isolates the contents from said preserved food composition, the contents of said secondary container comprising sodium bicarbonate encapsulated with an encapsulant selected from dehydrated fat, dehydrated oil and combinations of both in a quantity sufficient upon mixing therewith to increase the pH of said foodstuff to a value in the range of from 5 to 7;
    wherein the pH of the starchy foodstuff is determined by mincing about a 50 gram sample of said starchy foodstuff in a blender for about 1 minute with about 50 grams of distilled water to form a puree and measuring the pH of the puree with a pH meter.

12. A packaged meal according to any one of claims 1 to 11, wherein the contents of said secondary container additionally comprise seasonings selected from salt, dried chives, dried onions, dried bread crumbs, dehydrated cheese and combinations thereof.

13. A ready-to-eat meal comprising an admixture of:
    (1) a previously stored shelf-stable, fully cooked, starchy foodstuff selected from alimentary pastes, grains, potatoes and combinations thereof, wherein said foodstuff is shelf-stabilized with an edible acid, and
    (2) an edible alkaline neutralizing agent in a quantity sufficient to increase the pH of said foodstuff upon mixing therewith to a value in the range of from 5 to 7 following mixing;
    wherein said edible alkaline neutralizing agent is sufficiently reactive at ambient temperature to increase the pH of said foodstuff upon mixing therewith to a value in the range of from 5 to 7 for consumption, within a short time after mixing;
    wherein the pH of the starchy foodstuff is determined by mincing about a 50 gram sample of said starchy foodstuff in a blender for about 1 minute with about 50 grams of distilled water to form a puree and measuring the pH of the puree with a pH meter.

14. A ready-to-eat meal according to claim 13, wherein said foodstuff of component (1) has a pH with a value in the range of from 3.5 to 4.6 provided by said edible acid prior to admixture with component (2).

15. A ready-to-eat meal according to claim 13 or claim 14, stabilized, fully cooked, starchy foodstuff is selected from rice, alimentary pastes obtained from semolina flour and combinations thereof.

16. A ready-to-eat meal according to any one of claims 13 to 15, wherein said edible acid is selected from acetic acid, citric acid, tartaric acid, propionic acid, sorbic acid, hydrochloric acid, lactic acid, benzoic acid, fumaric acid, adipic acid, phosphoric acid, malic acid and combinations thereof.

17. A ready-to-eat meal according to any one of claims 13 to 16, wherein the edible alkaline neutralizing agent is selected from the group consisting of sodium bicarbonate, sodium carbonate, potassium bicarbonate and potassium carbonate and said alkaline neutralizing agent is encapsulated in dehydrated palm oil.

18. A ready-to-eat meal according to claim 13, comprising an admixture of:
   (1) a shelf-stable, fully cooked, starchy foodstuff selected from rice, alimentary pastes obtained from semolina flour and combinations thereof, said foodstuff having a pH with a value in the range of from 3.5 to 4.6 provided by an acid selected from propionic acid, lactic acid and combinations thereof; and
   (2) a quantity of sodium bicarbonate encapsulated in dehydrated palm oil in a quantity sufficient to increase the pH of said foodstuff to a value in the range of from 5 to 7 when admixed therewith;
      wherein the pH of the starch foodstuff is determined by mincing about a 50 gram sample of said starchy foodstuff in a blender for about 1 minute with about 50 grams of distilled water to form a puree and measuring the pH of the puree with a pH meter.

19. A process for producing a packaged, shelf-stable, fully cooked, starchy foodstuff comprising
   (1) a starchy foodstuff selected from grains, alimentary pastes and potatoes,
   (2) an edible acid and
   (3) an edible lubricant having a melting point below about 95°F (about 35°C), said process comprising the steps of:
   (a) preparing said starchy foodstuff for packaging by:
      (i) heating said foodstuff in boiling water and/or steam until fully cooked, the quantity of water and/or steam being sufficient to provide the desired moisture level within said foodstuff;
      (ii) adding a quantity of an edible acid to the fully cooked, starchy foodstuff sufficient to provide shelf-stability;
      (iii) mixing the edible acid and fully cooked, starchy foodstuff to uniformly distribute the edible acid on the foodstuff; and
      (iv) mixing an edible lubricant with the mixture of edible acid and starchy foodstuff in a quantity up to about 15% by weight, based on the weight of the starch foodstuff; and
   (b) filling a container with the prepared starchy foodstuff, said container being resistant to wet heat at a temperature about 180°F (82°C) and comprised of a material which isolates the contents from atmospheric oxygen;
   (c) sealing said container so as to exclude air from the prepared starchy foodstuff therein; and
   (d) exposing the contents of said container to a pasteurization process or a sterilization process.

20. A process according to claim 19, wherein the quantity of edible acid added to the starchy foodstuff is sufficient to provide a pH in the range of from 3.5 to 4.6 when mixed therewith;
      wherein the pH of the starchy foodstuff is determined by mincing about a 50 gram sample of said starchy foodstuff in a blender for about 1 minute with about 50 grams of distilled water to form a puree and measuring the pH of the puree with a pH meter.

21. A process according to claim 19 or claim 20, wherein the starchy foodstuff is an alimentary paste obtained from semolina flour and the heating step proceeds until a moisture level of from 75% to 85% by weight is obtained.

**22.** A process according to claim 19 or claim 20, wherein the starchy foodstuff is rice and the heating step proceeds until a moisture level of from 60% to 70% by weight moisture is obtained.

**23.** A process according to claim 19 or claim 20, wherein the starchy foodstuff is heated in excess boiling water and said process comprises an additional step of draining the excess water from the fully cooked, starchy foodstuff prior to the addition of edible acid.

**24.** A process according to any one of claims 19 to 23, wherein the edible acid is selected from acetic acid, citric acid, tartaric acid, sorbic acid, lactic acid, adipic acid, fumaric acid, benzoic acid, propionic acid, hydrochloric acid, malic acid, phosphoric acid and mixtures thereof.

**25.** A process according to any one of claims 19 to 24, wherein the edible lubricant is an oil selected from unsaturated safflower oil, peanut oil, coconut oil, corn oil, olive oil, palm oil and mixtures thereof.

**26.** A process according to any one of claims 19 to 25, lubricant is from 1% to 8% by weight based on the total weight of said fully cooked, starchy foodstuff.

**27.** A process according to any one of claims 19 to 26, wherein air is excluded from the sealed container by generating water vapour from the fully cooked, starchy foodstuffs.

**28.** A process according to claim 19 for producing a packaged, shelf-stable, fully cooked starchy foodstuff comprising
  (1) a starchy foodstuff selected from grains, alimentary pastes, potatoes and combinations thereof,
  (2) an edible acid and
  (3) an edible lubricant having a melting point below about 95°F (about 35°C), said process comprising the steps of:
  (a) preparing said starchy foodstuff for packaging by:
    (i) heating said foodstuff in boiling water and/or steam until fully cooked, at a temperature sufficiently high to pasteurize said foodstuff, the quantity of water and/or steam being sufficient to provide the desired moisture level within said foodstuff;
    (ii) maintaining the fully cooked, starchy foodstuff pasteurized until packaged;
    (iii) adding a quantity of an edible acid to the starchy foodstuff sufficient to provide a pH in the range of from 3.5 to 4.6 when mixed therewith;
    (iv) mixing the edible acid and said starchy foodstuff to uniformly distribute said edible acid on said starchy foodstuff; and
    (v) mixing an edible lubricant with the mixture of edible acid and starchy foodstuff in a quantity up to about 15% by weight based on the weight of said starchy foodstuff; and
  (b) filing an aseptic container with the prepared starchy foodstuff of step (a), said aseptic container being resistant to wet heat at a temperature of about 180°F (82°C) and above and comprised of a material which substantially isolates the contents from atmospheric oxygen;
  (c) sealing said aseptic container so as to exclude air from the prepared starchy foodstuff; and,
    optionally, exposing the contents of the sealed aseptic container to a pasteurization process;
    wherein the pH of the starchy foodstuff is determined by mincing about a 50 gram sample of said starchy foodstuff in a blender for about 1 minute with about 50 grams of distilled water to form a puree and measuring the pH of the puree with a pH meter.

**29.** A process according to claim 28, comprising
  (1) a starchy foodstuff selected from rice, alimentary pastes obtained from semolina flour and combinations therefore,
  (2) an edible acid, and
  (3) an edible lubricant, said process comprising the steps of:
  (a) preparing a starchy foodstuff for packaging by:
    (i) heating said foodstuff in excess boiling water until fully cooked to provide a moisture content of from 60% to 70% by weight for rice and a moisture content of from 75% to 85% by weight for alimentary pastes;
    (ii) draining the excess boiling water from the fully cooked, starchy foodstuff;
    (iii) maintaining the fully cooked, starchy foodstuff at a temperature above about 180°F (82°C) until packaged;

(iv) adding a quantity of an edible acid to the fully cooked, starchy foodstuff sufficient to provide it with a pH in the range of 3.5 to 4.6; said edible acid being selected from propionic acid, lactic acid and combinations thereof;

(v) mixing the edible acid and fully cooked, starchy foodstuff for a period of about 1 to 3 minutes to uniformly distribute the edible acid; and

(vi) mixing an edible lubricant with the mixture of edible acid and starchy foodstuff, said edible lubricant being selected from corn oil and unsaturated safflower oil in a quantity of from 1% to 8% by weight based on the weight of starchy foodstuff; and

(b) filling a polyester pouch with the prepared starchy foodstuff of step (a), said polyester being resistant to wet heat at a temperature of about 180°F (82°C) and above and substantially resistant to permeation by atmospheric oxygen;

(c) sealing said polyester pouch while steam is generated from the prepared starchy foodstuff; and

(d) heating the contents of the sealed polyester pouch to a temperature in excess of about 180°F (82°C)

wherein the pH of the starchy foodstuff is determined by mincing about a 50 gram sample of said starch foodstuff in a blender for about 1 minute with about 50 grams of distilled water to form a puree and measuring the pH of the puree with a pH meter.

## Revendications

1. Repas emballé totalement cuit et stable au stockage, comprenant :

(a) un récipient primaire scellé qui isole pratiquement de l'oxygène atmosphérique son contenu, celui-ci étant une composition alimentaire conservée constituée par :

(i) un produit alimentaire amylacé totalement cuit sélectionné parmi des pâtes alimentaires, des graines, des légumes amylacés et des pommes de terre; et

(ii) un acide comestible uniformement dispersé dans ce récipient primaire avec ce produit alimentaire en une quantité suffisante pour procurer la stabilité au stockage; et

(b) un récipient secondaire qui isole pratiquement de la composition alimentaire conservée son contenu, celui-ci comprenant un agent neutralisant alcalin comestible en une quantité suffisante pour augmenter le pH du produit alimentaire, lors du mélange avec celui-ci,jusqu'à une valeur comprise entre 5 et 7, après stockage;

dans lequel l'agent neutralisant alcalin comestible réagit suffisamment à la température ambiante pour augmenter le pH du produit alimentaire, lors du mélange avec celui-ci jusqu'à une valeur comprise entre 5 et 7 après un court intervalle après mélange, et

dans lequel le pH du produit alimentaire amylacé est déterminé en hachant un échantillon d'environ 50 grammes de ce produit alimentaire amylacé dans un mélangeur pendant environ 1 mn avec environ 50 grammes d'eau distillée pour former une purée et en mesurant le pH de la purée avec un pH-mètre.

2. Repas emballé selon la revendication 1, dans lequel la quantité d'acide comestible procure à ce produit alimentaire amylacé un pH compris entre 3,5 et 4,6.

3. Repas emballé selon la revendication 1 ou la revendication 2, dans lequel le produit alimentaire est choisi parmi le riz et des pâtes alimentaires préparés à partir de farines choisies parmi la farine de semoule, la farine de blé dur, la farine de maïs, la farine de sarrazin, la fleur de farine, la farine de riz, la farine de blé complet et leurs mélanges.

4. Repas emballé selon l'une quelconque des revendications 1 à 3, dans lequel l'acide comestible est choisi parmi les acides suivants : acétique, citrique, tartarique, propionique, chlorhydrique, fumarique, adipique, benzoïque, malique, phosphorique, lactique, sorbique et leurs mélanges.

5. Repas emballé selon la revendication 4, dans lequel l'acide comestible est choisi parmi l'acide propionique et l'acide lactique.

6. Repas emballé selon l'une quelconque des revendications 1 à 5, dans lequel la composition alimentaire conservée comprend en outre un lubrifiant comestible en une quantité inférieure à 15% en poids, lequel lubrifiant comestible est choisi parmi l'huile de carthame insaturée, l'huile d'arachide, l'huile de coprah, l'huile de palme, l'huile de tournesol, l'huile de maïs, l'huile d'olive et leurs combinaisons.

**7.** Repas emballé selon la revendication 6, dans lequel le lubrifiant comestible est présent en une quantité de 1 à 8% en poids sur la base du poids total de la composition alimentaire conservée.

**8.** Repas emballé selon l'une quelconque des revendications 1 à 7, dans lequel l'agent neutralisant alcalin comestible est sélectionné parmi le bicarbonate de sodium, le carbonate de sodium, le bicarbonate de potassium et le carbonate de potassium.

**9.** Repas emballé selon la revendication 8, dans lequel l'agent neutralisant alcalin comestible est encapsulé dans une graisse déshydratée ou dans une huile déshydratée.

**10.** Repas emballé selon l'une quelconque des revendication 1 à 9, dans lequel le récipient primaire scellé est une poche formée de résine synthétique.

**11.** Repas emballé selon la revendication 1, comprenant :
(a) une poche de polyester qui isole pratiquement de l'oxygène atmosphérique son contenu, celui-ci étant une composition alimentaire conservée constituée par :
(i) un produit alimentaire amylacé totalement cuit choisi parmi le riz, les pâtes alimentaires à partir de farine de semoule et leurs combinaisons,
(ii) un acide comestible uniformément dispersé dans la poche de polyester et choisi par l'acide propionique, l'acide lactique et leurs combinaisons, en une quantité suffisante pour procurer au produit alimentaire un pH ayant une valeur comprise entre 4,0 et 4,3, et
(iii) de 1 à 8% en poids d'huile végétale, sur la base du poids total de la composition alimentaire conservée, uniformément dispersée dans la poche en polyester,
(b) un récipient secondaire qui isole pratiquement de la composition alimentaire conservée son contenu, celui-ci comprenant du bicarbonate de sodium encapsulé dans un produit d'encapsulation choisi parmi une graisse déshydratée, une huile déshydratée ou des combinaisons des deux en une quantité suffisante pour augmenter, lors de leur mélange, le pH de ce produit alimentaire jusqu'à une valeur comprise entre
dans lequel le pH du produit alimentaire amylacé est déterminé en hachant un échantillon d'environ 50 grammes du produit alimentaire amylacé dans un mélangeur pendant environ 1 mn avec environ 50 grammes d'eau distillée pour former une purée et en mesurant le pH de la purée avec un pH-mètre.

**12.** Repas emballé selon l'une quelconque des revendications 1 à 11, dans lequel le contenu de ce récipient secondaire comprend en outre des assaisonnements choisis parmi le sel, la ciboulette séchée, les oignons séchés, les miettes de pain séchées, le fromage déshydraté et leurs combinaisons.

**13.** Repas tout prêt comprenant un mélange de :
(1) un produit alimentaire amylacé totalement cuit et stable au stockage, précédemment stocké, et choisi parmi des pâtes alimentaires, des graines, des pommes de terre et leurs combinaisons, le produit alimentaire étant stabilisé au stockage avec un acide comestible, et
(2) un agent neutralisant alcalin comestible en une quantité suffisante pour augmenter, lors de leur mélange, le pH de ce produit alimentaire jusqu'à une valeur comprise entre 5 et 7, après mélange;
dans lequel l'agent neutralisant alcalin comestible est suffisamment réactif à la température ambiante pour augmenter, lors de leur mélange, le pH du produit alimentaire jusqu'à une valeur comprise entre 5 et 7 à des fins de consommation, après un court intervalle après mélange; et
dans lequel le pH du produit alimentaire amylacé est déterminé en hachant un échantillon d'environ 50 grammes de ce produit alimentaire amylacé dans un mélangeur pendant environ 1 mn avec environ 50 grammes d'eau distillée pour former une purée et en mesurant le pH de la purée avec un pH-mètre.

**14.** Repas tout prêt selon la revendication 13, dans lequel le produit alimentaire du composant (1) a un pH ayant une valeur comprise entre 3,5 et 4,6 procuré par cet acide comestible avant mélange avec le composant (2).

**15.** Repas tout prêt selon la revendication 13 ou la revendication 14, dans lequel le produit alimentaire amylacé totalement cuit et stabilisé est choisi parmi le riz, les pâtes alimentaires à base de farine de semoule et leurs combinaisons.

**16.** Repas tout prêt selon l'une quelconque des revendications 13 à 15, dans lequel l'acide comestible est

EP 0 322 996 B1

choisi parmi les acides suivants : acétique, citrique, tartarique, propionique, sorbique, chlorhydrique, lactique, benzoïque, fumarique, adipique, phosphorique, malique et leurs combinaisons.

**17.** Repas tout prêt selon l'une quelconque des revendications 13 à 16, dans lequel l'agent neutralisant alcalin comestible est choisi dans le groupe comprenant le bicarbonate de sodium, le carbonate de sodium, le bicarbonate de potassium et le carbonate de potassium, et l'agent neutralisant alcalin est encapsulé dans de l'huile de palme déshydratée.

**18.** Repas tout prêt selon la revendication 13, comprenant un mélange de :

(1) un produit alimentaire amylacé totalement cuit et stable au stockage, choisi parmi le riz, les pâtes alimentaires à base de farine de semoule et leurs combinaisons, ce produit alimentaire ayant un pH compris entre 3,5 et 4,6, procuré par un acide choisi parmi l'acide propionique, l'acide lactique et leurs combinaisons; et

(2) du bicarbonate de sodium encapsulé dans de l'huile de palme déshydratée en une quantité suffisante pour augmenter le pH de ce produit alimentaire jusqu'à une valeur comprise entre 5 et 7 lorsqu'ils sont mélangés ensemble;

dans lequel le pH du produit alimentaire amylacé est déterminé en hachant un échantillon d'environ 50 grammes de ce produit alimentaire amylacé dans un mélangeur pendant environ 1 mn avec environ 50 grammes d'eau distillée pour former une purée et en mesurant le pH de la purée avec un pH-mètre.

**19.** Procédé pour produire un produit alimentaire amylacé totalement cuit emballé et stable au stockage, comprenant :

(1) un produit alimentaire amylacé choisi parmi des graines, des pâtes alimentaires et des pommes de terre;

(2) un acide comestible; et

(3) un lubrifiant comestible ayant un point de fusion inférieur à environ 35°C (95°F), ce procédé comprenant les stades suivants :

(a) préparer pour l'emballage ce produit alimentaire amylacé en :

(i) chauffant ce produit alimentaire dans de l'eau bouillante et/ou dans de la vapeur jusqu'à cuisson complète, la quantité d'eau et/ou de vapeur étant suffisante pour procurer à ce produit alimentaire le degré d'humidité désiré;

(ii) ajoutant au produit alimentaire amylacé totalement cuit une quantité d'acide comestible suffisante pour lui conférer une stabilité au stockage;

(iii) mélangeant l'acide comestible et le produit alimentaire amylacé totalement cuit pour distribuer uniformément l'acide comestible sur le produit alimentaire; et

(iv) mélangeant un lubrifiant comestible avec le mélange d'acide comestible et de produit alimentaire amylacé en une quantité pouvant atteindre 15% en poids, sur la base du poids du produit alimentaire amylacé; et

(b) remplir un récipient avec le produit alimentaire amylacé préparé, ce récipient résistant à la chaleur humide à une température d'environ 82°C (180°F)et étant en un matériau qui isole le contenu de l'oxygène atmosphérique;

(c) sceller ce récipient de façon à exclure l'air du produit alimentaire amylacé préparé contenu dans ce récipient; et

(d) exposer le contenu de ce récipient à une opération de pasteurisation ou de stérilisation.

**20.** Procédé selon la revendication 19, dans lequel la quantité de l'acide comestible ajoutée au produit alimentaire amylacé est suffisante pour procurer un pH compris entre 3,5 et 4,6 lors de leur mélange; dans lequel le pH du produit alimentaire amylacé est déterminé en hachant un échantillon d'environ 50 grammes de ce produit alimentaire amylacé dans un mélangeur pendant environ 1 mn avec environ 50 grammes d'eau distillée pour former une purée et en mesurant le pH de la purée avec un pH-mètre.

**21.** Procédé selon la revendication 19 ou la revendication 20, dans lequel le produit alimentaire amylacé est une pâte alimentaire à base de farine de semoule et le stade de chauffage continue jusqu'à l'obtention d'un taux d'humidité de 75 à 85% en poids.

**22.** Procédé selon la revendication 19 ou la revendication 20, dans lequel le produit alimentaire amylacé est du riz et le stade de chauffage continue jusqu'à l'obtention d'un degré d'humidité de 60 à 70% en poids.

16

**23.** Procédé selon la revendication 19 ou la revendication 20, dans lequel le produit alimentaire amylacé est chauffé dans un excès d'eau bouillante et dans lequel ce procédé comporte un stade additionnel consistant à égoutter l'eau en excès du produit alimentaire amylacé totalement cuit avant l'addition d'un acide comestible.

**24.** Procédé selon l'une quelconque des revendications 19 à 23, dans lequel l'acide comestible est choisi parmi les acides suivants : acétique, citrique, tartarique, sorbique, lactique, adipique, fumarique, benzoïque, propionique, chlorhydrique, malique, phosphorique et leurs mélanges.

**25.** Procédé selon l'une quelconque des revendications 19 à 24, dans lequel le lubrifiant comestible est une huile choisie parmi l'huile de carthame insaturée, l'huile d'arachide, l'huile de coprah, l'huile de maïs, l'huile d'olive, l'huile de palme et leurs mélanges.

**26.** Procédé selon l'une quelconque des revendications 19 à 25, dans lequel la quantité de lubrifiant utilisée est comprise entre 1 et 8% en poids, sur la base du poids total du produit alimentaire amylacé totalement cuit.

**27.** Procédé selon l'une quelconque des revendications 19 à 26, dans lequel l'air est exclu du récipient scellé par production de vapeur d'eau par le produit alimentaire amylacé totalement cuit.

**28.** Procédé selon la revendication 19, pour produire un produit alimentaire amylacé totalement cuit emballé et stable au stockage comprenant :

(1) un produit alimentaire amylacé choisi parmi les graines, les pâtes alimentaires, les pommes de terre et leurs combinaisons,

(2) un acide comestible, et

(3) un lubrifiant comestible ayant un point de fusion inférieur à environ 35°C (95°F), ce procédé comprenant les stades suivants :

(a) préparer le produit alimentaire amylacé pour l'emballage en :

(i) chauffant ce produit alimentaire dans de l'eau bouillante et/ou dans de la vapeur jusqu'à cuisson complète à une température suffisamment élevée pour pasteuriser le produit alimentaire, la quantité d'eau et/ou de vapeur étant suffisante pour procurer le degré d'humidité recherché à l'intérieur du produit alimentaire;

(ii) maintenant le produit alimentaire amylacé totalement cuit pasteurisé jusqu'à l'emballage;

(iii) ajoutant au produit alimentaire amylacé une quantité d'acide comestible suffisante pour procurer un pH compris entre 3,5 et 4,6 lors de leur mélange;

(iv) mélangeant l'acide comestible et le produit alimentaire amylacé pour distribuer uniformément cet acide comestible sur le produit alimentaire amylacé; et

(v) mélangeant un lubrifiant comestible avec le mélange d'acide comestible et de produit alimentaire amylacé en une quantité pouvant atteindre 15% en poids, sur la base du poids du produit alimentaire amylacé; et

(b) remplir un récipient aseptique avec le produit alimentaire amylacé préparé au stade (a), ce récipient aseptique résistant à la chaleur humide à une température d'environ 82°C (180°F) et plus et constitué par un matériau qui isole pratiquement le contenu de l'oxygène atmosphérique;

(c) sceller ce récipient aseptique de façon à exclure l'air du produit alimentaire amylacé préparé; et facultativement, exposer le contenu du récipient aseptique scellé à une opération de pasteurisation;

dans lequel le pH du produit alimentaire amylacé est déterminé en hachant un échantillon d'environ 50 grammes de ce produit alimentaire amylacé dans un mélangeur pendant environ 1 mn avec environ 50 grammes d'eau distillée pour former une purée et mesurer le pH de la purée avec un pH-mètre.

**29.** Procédé selon la revendication 28, pour produire un produit alimentaire amylacé totalement cuit emballé et stable au stockage, comprenant :

(1) un produit alimentaire amylacé choisi parmi le riz, des pâtes alimentaires à base de farine de semoule et leurs combinaisons,

(2) un acide comestible, et

(3) un lubrifiant comestible, ce procédé comprenant les stades suivants :

(a) préparer un produit alimentaire amylacé pour l'emballage en :

(i) chauffant ce produit alimentaire dans un excès d'eau bouillante jusqu'à cuisson complète pour procurer une teneur en humidité comprise entre 60 et 70% en poids pour le riz et une teneur en humidité comprise entre 75 et 85% en poids pour des pâtes alimentaires;

(ii) égouttant l'excès d'eau bouillante du produit alimentaire amylacé totalement cuit;

(iii) maintenant le produit alimentaire amylacé totalement cuit à une température supérieure à environ 82°C (180°F) jusqu'à l'emballage;

(iv) ajoutant au produit alimentaire amylacé totalement cuit une quantité d'un acide comestible suffisante pour lui procurer un pH compris entre 3,5 et 4,6, cet acide comestible étant choisi parmi l'acide propionique, l'acide lactique et leurs combinaisons;

(v) mélangeant l'acide comestible et le produit alimentaire amylacé totalement cuit pendant une période d'environ 1 à 3 mn pour distribuer uniformément l'acide comestible; et

(vi) mélangeant un lubrifiant comestible avec le mélange d'acide comestible et de produit alimentaire amylacé, ce lubrifiant comestible étant choisi parmi l'huile de maïs et l'huile de carthame insaturée en une quantité allant de 1 à 8% en poids sur la base du poids du produit alimentaire amylacé; et

(b) remplir une poche de polyester avec le produit alimentaire amylacé préparé au stade (a), ce polyester résistant à une chaleur humide à une température d'environ 82°C (180°F) et plus et résistant pratiquement à la pénétration de l'oxygène atmosphérique;

(c) sceller la poche de polyester pendant que de la vapeur est produite par le produit alimentaire amylacé préparé; et

(d) chauffer le contenu de la poche de polyester scellée à une température supérieure à environ 82°C (180°F);

dans lequel le pH du produit alimentaire amylacé est déterminé en hachant un échantillon d'environ 50 grammes de ce produit alimentaire amylacé dans un mélangeur pendant environ 1 mn avec environ 50 grammes d'eau distillée pour former une purée et en mesurant le pH de la purée avec un pH-mètre.

## Patentansprüche

1. Eine lagerstabile, fertig gekochte, in Portionen abgepackte Mahlzeit, bestehend aus

(a) einem versiegelten ersten Behälter, der seinen Inhalt im wesentlichen von atmosphärischem Sauerstoff isoliert, wobei dieser Inhalt eine konservierte Nahrungszusammensetzung ist, die

(i) ein fertig gekochtes Nahrungsmittel ausgewählt aus Teigwaren, Getreide, stärkehaltigen Hülsenfrüchten und Kartoffeln, und

(ii) eine genießbare Säure, die in diesem ersten Behälter mit dem Nahrungsmittel gleichmäßig verteilt ist und die in hinreichender Menge vorhanden ist, um dem Inhalt Lagerstabilität zu verleihen,

einschließt, und

(b) einem zweiten Behälter, der seinen Inhalt im wesentlichen von der vorgenannten Nahrungszusammensetzung isoliert, wobei der Inhalt dieses zweiten Behälters ein genießbares alkalisches Neutralisationsmittel einschließt, das in hinreichender Menge vorhanden ist, um den pH-Wert der vorgenannten Nahrungszusammensetzung auf 5 bis 7 zu steigern, wenn es nach deren Lagerung mit ihr vermischt wird,

wobei das genießbare alkalische Neutralisationsmittel bei Umgebungstemperatur hinreichend reaktiv ist, um nach dem Vermischen mit der Nahrungszusammensetzung deren pH-Wert in kurzer Zeit auf einen Wert im Bereich von 5 bis 7 zu steigern und wobei der pH-Wert der stärkehaltigen Nahrungszusammensetzung in der Weise bestimmt wird, dass man eine 50 g-Probe der Nahrungszusammensetzung mit 50 g destilliertem Wasser in einem Mischer während etwa 1 Minute zu einem Brei zerkleinert und den pH-Wert dieses Breies mit einem pH-Meter misst.

2. Eine abgepackte Mahlzeit nach Anspruch 1, worin die Menge der genießbaren Säure so bemessen ist, dass ein pH-Wert der Nahrungszusammensetzung im Bereich von 3,5 bis 4,6 resultiert.

3. Eine abgepackte Mahlzeit nach Anspruch 1 oder 2, worin das Nahrungsmittel aus Reis und Teigwaren ausgewählt ist, wobei die Teigwaren aus einem Mehl hergestellt sind, das aus Grießmehl, Hartweizenmehl, Maismehl, Buchweizenmehl, Reismehl, Feinweizenmehl, Vollkornweizenmehl und Mischungen davon ausgewählt ist.

4. Eine abgepackte Mahlzeit nach einem der Ansprüche 1 bis 3, worin die genießbare Säure ausgewählt ist aus Essigsäure, Zitronensäure, Weinsäure, Propionsäure, Salzsäure, Fumarsäure, Adipinsäure, Bezoesäure, Äpfelsäure, Phosphorsäure, Milchsäure, Sorbinsäure, und Mischungen dieser Säuren.

**5.** Eine abgepackte Mahlzeit nach Anspruch 4, worin die genießbare Säure aus Propionsäure und Milchsäure ausgewählt ist.

**6.** Eine abgepackte Mahlzeit nach einem der Ansprüche 1 bis 5, worin die konservierte Nahrungszusammensetzung zusätzlich ein genießbares Gleitmittel in einer Menge von weniger als 15 Gew% enthält, wobei das Gleitmittel aus ungesättigtem Färberdistelöl, Erdnußöl, Kokosnußöl, Palmöl, Sonnenblumenöl, Maisöl, Olivenöl, und Mischungen dieser Öle ausgewählt ist.

**7.** Eine abgepackte Mahlzeit nach Anspruch 6, worin das genießbare Gleitmittel bezogen auf das Gesamtgewicht der konservierten Nahrungszusammensetzung in einer Menge von 1 bis 8 Gew% enthalten ist.

**8.** Eine abgepackte Mahlzeit nach einem der Ansprüche 1 bis 7, worin das genießbare alkalische Neutralisationsmittel aus Natriumbicarbonat, Natriumcarbonat, Kaliumbicarbonat und Kaliumcarbonat ausgewählt ist.

**9.** Eine abgepackte Mahlzeit nach Anspruch 8, worin das abgepackte alkalische Neutralisationsmittel in einem ungesättigten Fett oder in einem ungesättigten Öl eingekapselt ist.

**10.** Eine abgepackte Mahlzeit nach einem der Ansprüche 1 bis 9, worin der erste Behälter aus einem Kunstharz hergestellt ist.

**11.** Eine abgepackte Mahlzeit nach Anspruch 1, bestehend aus
(a) einem Polyesterbeutel, der den Inhalt im wesentlichen von atmosphärischen Sauerstoff isoliert, wobei dieser Inhalt eine konservierte Nahrungszusammensetzung ist, die
(i) ein fertig gekochtes, stärkehaltiges Nahrungsmittel, ausgewählt aus Reis, aus Grießmehl hergestellten Teigwaren, und Kombinationen davon,
(ii) eine in diesem Polyesterbeutel gleichmäßig verteilte genießbare Säure, die aus Propionsäure, Milchsäure und Kombinationen dieser Säuren ausgewählt ist und deren Menge so bemessen ist, daß ein pH-Wert der Nahrungszusammensetzung von 4,0 bis 4,3 resultiert, und
(iii) bezogen auf das Gesamtgewicht der konservierten Nahrungszusammensetzung 1 bis 8 Gew% Pflanzenöl, das in dem Polyesterbeutel gleichmäßig verteilt ist,
einschließt, und
(b) einem zweiten Behälter, der den Inhalt im wesentlichen von der konservierten Nahrungszusammensetzung isoliert, wobei der Inhalt des zweiten Behälters Natriumbicarbonat darstellt, das mit einem kapselbildenden Material ausgewählt aus ungesättigten Fetten, ungesättigten Ölen und Kombinationen davon eingekapselt ist und das in einer solchen Menge vorhanden ist, daß sich beim Vermischen mit der Nahrungszusammensetzung ein pH-Wert von 5 bis 7 ergibt und wobei das genießbare alkalische Neutralisationsmittel bei Umgebungstemperatur hinreichend reaktiv ist, um nach dem Vermischen mit der Nahrungszusammensetzung deren pH-Wert in kurzer Zeit auf einen Wert im Bereich von 5 bis 7 zu steigern und wobei der pH-Wert der stärkehaltigen Nahrungszusammensetzung in der Weise bestimmt wird, dass man eine 50 g-Probe der Nahrungszusammensetzung mit 50 g destilliertem Wasser in einem Mischer während etwa 1 Minute zu einem Brei zerkleinert und den pH-Wert dieses Breies mit einem pH-Meter mißt.

**12.** Eine abgepackte Mahlzeit nach einem der Ansprüche 1 bis 11, worin der Inhalt des zweiten Behälters zusätzlich Gewürze ausgewählt aus Salz, getrocknetem Schnittlauch, getrockneten Zwiebeln, getrockneten Brotkrumen, Trockenkäse und Kombinationen dieser Gewürze umfaßt.

**13.** Ein Fertiggericht bestehend aus
(1) einem zuvor gelagerten, lagerstabilen, fertig gekochten, stärkehaltigen Nahrungsmittel ausgewählt aus Teigwaren, Getreide, Kartoffeln und Kombinationen davon, wobei das Nahrungsmittel mit einer genießbaren Säure lagerstabil gemacht ist, und
(2) einem genießbaren alkalischen Neutralisationsmittel in einer Menge, die ausreicht, um den pH-Wert der Nahrung in kurzer Zeit auf einen Wert im Bereich von 5 bis 7 zu steigern, wobei das genießbare alkalische Neutralisationsmittel bei Umgebungstemperatur hinreichend reaktiv ist, um nach dem Vermischen mit der Nahrungszusammensetzung deren pH-Wert in kurzer Zeit auf einen Wert im Bereich von 5 bis 7 zu steigern und wobei der pH-Wert der stärkehaltigen Nahrungszusammensetzung in der Weise bestimmt wird, daß man eine 50 g-Probe der Nahrungszusammensetzung mit 50 g destilliertem Wasser in einem Mischer während etwa 1 Minute zu einem Brei zerkleinert und den pH-Wert dieses Breies mit einem pH-Meter mißt.

14. Ein Fertiggericht nach Anspruch 13, worin die Nahrung der Komponente (1) vor dem Zumischen der Komponente (2) auf Grund ihres Gehaltes an genießbarer Säure einen pH-Wert im Bereich von 3,5 bis 4,6 hat.

15. Ein Fertiggericht nach einem der Ansprüche 13 oder 14, worin das stabilisierte, fertig gekochte, stärkehaltige Nahrungsmittel aus Reis, Teigwaren, die aus Grießmehl hergestellt sind oder Kombinationen davon ausgewählt ist.

16. Ein Fertiggericht nach einem der Ansprüche 13 bis 15, worin die genießbare Säure aus Essigsäure, Zitronensäure, Weinsäure, Propionsäure, Sorbinsäure, Salzsäure, Milchsäure, Benzoesäure, Fumarsäure, Adipinsäure, Phosphorsäure, Apfelsäure und Kombinationen dieser Säuren ausgewählt ist.

17. Ein Fertiggericht nach einem der Ansprüche 13 bis 16, worin das alkalische Neutralisationsmittel ausgewählt ist, aus der Gruppe bestehend aus Natriumbicarbonat, Natriumcarbonat, Kaliumbicarbonat und Kaliumcarbonat, und worin das alkalische Neutralisationsmittel in dehydriertes Palmöl eingekapselt ist.

18. Ein Fertiggericht nach Anspruch 13, bestehend aus
(1) einem lagerstabilen, fertig gekochten, stärkehaltigen Nahrungsmittel ausgewählt aus Reis, Teigwaren, die aus Grießmehl hergestellt sind, und Kombinationen davon, wobei das Nahrungsmittel einen durch Propionsäure, Milchsäure oder Kombinationen davon eingestellten pH-Wert im Bereich von 3,5 bis 4,6 hat, und
(2) in dehydriertes Palmöl eingekapseltes Natriumbicarbonat, wobei das Natriumbicarbonat in einer Menge angewendet wird, die ausreicht, um den pH-Wert des Nahrungsmittels auf einen Wert im Bereich von 5 bis 7 zu steigern, wenn es dem Nahrungsmittel zugemischt wird,
wobei der pH-Wert der stärkehaltigen Nahrungszusammensetzung in der Weise bestimmt wird, daß man eine 50 g-Probe der Nahrungszusammensetzung mit 50 g destilliertem Wasser in einem Mischer während etwa 1 Minute zu einem Brei zerkleinert und den pH-Wert dieses Breies mit einem pH-Meter mißt.

19. Ein Verfahren zur Herstellung eines abgepackten, lagerstabilen, fertig gekochten, stärkehaltigen Nahrungsmittels, enthaltend
(1) ein stärkehaltiges Nahrungsmittel, ausgewählt aus Getreide, Teigwaren und Kartoffeln,
(2) eine genießbare Säure, und
(3) ein genießbares Gleitmittel mit einem Schmelzpunkt unter 35°C,
das die folgenden Schritte umfaßt:
(a) Vorbereiten des stärkehaltigen Nahrungsmittels für das Verpacken durch
(i) Erhitzen des Nahrungsmittels in kochendem Wasser und/oder Dampf, bis es fertig gekocht ist, wobei die Menge Wasser und/oder Dampf so bemessen wird, dass das Nahrungsmittel den gewünschten Feuchtigkeitsgehalt erhält,
(ii) Zugabe einer für die Erlangung von Lagerstabilität ausreichenden Menge einer genießbaren Säure zu dem fertig gekochten, stärkehaltigen Nahrungsmittel,
(iii) Vermischen der genießbaren Säure mit dem fertig gekochten, stärkehaltigen Nahrungsmittel, um die genießbare Säure gleichmäßig auf das Nahrungsmittel zu verteilen, und
(iv) Zumischen eines genießbaren Gleitmittels zu der Mischung der genießbaren Säure und des stärkehaltigen Nahrungsmittels, wobei das genießbare Gleitmittel in einer Menge von bis zu 15 Gew% bezogen auf das Gewicht des stärkehaltigen Nahrungsmittels verwendet wird,
(b) Füllen eines bei etwa 82°C gegen feuchte Hitze stabilen Behälters mit dem vorbereiteten, stärkehaltigen Nahrungsmittel, der aus einem Material besteht, das den Inhalt von atmosphärischem Sauerstoff isoliert,
(c) Versiegeln dieses Behälters, um Luft von dem darin befindlichen vorbereiteten Nahrungsmittel auszuschließen, und
(d) Pasteurisieren oder Sterilisieren des Inhalts.

**20.** Ein Verfahren nach Anspruch 19, worin die genießbare Säure in einer Menge verwendet wird, die ausreicht um nach dem Vermischen mit dem stärkehaltigen Nahrungsmittel einen pH-Wert im Bereich von 3,5 bis 4,6 zu erzeugen, wobei der pH-Wert der stärkehaltigen Nahrungszusammensetzung in der Weise bestimmt wird, daß man eine 50 g-Probe der Nahrungszusammensetzung mit 50 g destilliertem Wasser in einem Mischer während etwa 1 Minute zu einem Brei zerkleinert und den pH-Wert dieses Breies mit einem pH-Meter mißt.

**21.** Ein Verfahren nach Ansprüchen 19 oder 20, worin das stärkehaltige Nahrungsmittel eine aus Grießmehl hergestellte Teigware ist und worin das Erhitzen so lange fortgesetzt wird bis ein Feuchtigkeitsgehalt von 75 Gew% bis 85 Gew% erreicht ist.

**22.** Ein Verfahren nach den Ansprüchen 19 oder 20, worin das stärkehaltige Nahrungsmittel Reis ist und worin das Erhitzen solange fortgesetzt wird, bis ein Feuchtigkeitsgehalt von 60 Gew% bis 70 Gew% erreicht ist.

**23.** Ein Verfahren nach den Ansprüchen 19 oder 20, worin das stärkehaltige Nahrungsmittel in einem Überschuss von kochendem Wasser erhitzt wird und das Verfahren vor der Zugabe der genießbaren Säure einen weiteren Schritt zur Entfernung des überschüssigen Wassers von dem fertig gekochten, stärkehaltigen Nahrungsmittel umfaßt.

**24.** Ein Verfahren nach einem der Ansprüche 19 bis 23, worin die genießbare Säure aus Essigsäure, Zitronensäure, Weinsäure, Sorbinsäure, Milchsäure, Adipinsäure, Fumarsäure, Benzoesäure, Propionsäure, Salzsäure, Äpfelsäure, Phosphorsäure und Mischungen dieser Säuren ausgewählt ist.

**25.** Ein Verfahren nach einem der Ansprüche 19 bis 24, worin das genießbare Gleitmittel ein aus ungesättigtem Färberdistelöl, Erdnußöl, Kokosnußöl, Maisöl, Olivenöl, Palmöl und Mischungen dieser Öle ausgewähltes Öl ist.

**26.** Ein Verfahren nach einem der Ansprüche 19 bis 25, worin das genießbare Gleitmittel in einer Menge von 1 Gew% bis 8 Gew% bezogen auf das Gesamtgewicht des fertig gekochten, stärkehaltigen Nahrungsmittels verwendet wird.

**27.** Ein Verfahren nach einem der Ansprüche 19 bis 26, worin die Luft aus dem versiegelten Behälter durch Erzeugung von Wasserdampf aus dem fertig gekochten, stärkehaltigen Nahrungsmittel verdrängt wird.

**28.** Ein Verfahren zur Herstellung eines abgepackten, lagerstabilen, fertig gekochten, stärkehaltigen Nahrungsmittels nach Anspruch 19, das

(1) ein stärkehaltiges Nahrungsmittel ausgewählt aus Getreide, Teigwaren, Kartoffeln und Kombinationen davon

(2) eine genießbare Säure, und

(3) ein genießbares Gleitmittel mit einem Schmelzpunkt unterhalb etwa 35° C

enthält, welches die folgenden Schritte umfaßt:

(a) Vorbereiten des stärkehaltigen Nahrungsmittels für das Abpacken durch:

(i) Erhitzen des Nahrungsmittels in kochendem Wasser und/oder Dampf bei einer Temperatur, die hinreichend hoch ist um das Nahrungsmittel zu pasteurisieren, wobei das Erhitzen solange durchgeführt wird, bis das Nahrungsmittel vollständig gekocht ist und wobei eine ausreichende Menge Wasser und/oder Dampf verwendet wird, um den gewünschten Feuchtigkeitsgehalt des Nahrungsmittels zu erreichen,

(ii) Erhaltung des fertig gekochten, stärkehaltigen Nahrungsmittels in pasteurisiertem Zustand bis es abgepackt ist,

(iii) Zugabe einer genießbaren Säure zu dem stärkehaltigen Nahrungsmittel in einer Menge, die ausreicht, um beim Vermischen mit dem Nahrungsmittel einen pH-Wert im Bereich von 3,5 bis 4,6 einzustellen,

(iv) Vermischen der gießbaren Säure mit dem stärkehaltigen Nahrungsmittel, um die genießbare Säure gleichmäßig auf das stärkehaltige Nahrungsmittel zu verteilen, und

(v) Vermischen eines genießbaren Gleitmittels mit der Mischung der genießbaren Säure und des stärkehaltigen Nahrungsmittels, wobei die Menge des genießbaren Gleitmittels bis etwa 15 Gew% bezogen auf das Gewicht des stärkehaltigen Nahrungsmittels beträgt, und

(b) Füllen eines keimfreien Behälters mit dem nach Schritt (a) vorbereiteten stärkehaltigen Nahrungsmittel, wobei ein keimfreier Behälter verwendet wird, der bei einer Temperatur von etwa 82° C und darüber gegen feuchte Hitze beständig ist und der aus einem Material besteht, das den Inhalt im wesentlichen von atmosphärischem Sauerstoff isoliert,

(c) Versiegeln des keimfreien Behälters, um Luft von dem vorbereiteten stärkehaltigen Nahrungsmittel auszuschließen, und, gewünschtenfalls, Pasteurisieren des Inhalts des versiegelten keimfreien Behälters, wobei der pH-Wert der stärkehaltigen Nahrungszusammensetzung in der Weise bestimmt wird, dass man eine 50 g-Probe der Nahrungszusammensetzung mit 50 g destilliertem Wasser in einem Mischer während etwa 1 Minute zu einem Brei zerkleinert und den pH-Wert dieses Breies mit einem pH-Meter mißt.

29. Ein Verfahren nach Anspruch 28 zur Herstellung eines abgepackten, lagerstabilen, fertig gekochten, stärkehaltigen Nahrungsmittels, das

(1) ein stärkehaltiges Nahrungsmittel, ausgewählt aus Reis, aus Grießmehl hergestellten Teigwaren und Kombinationen davon,

(2) eine genießbare Säure und

(3) ein genießbares Gleitmittel

enthält, das die folgenden Schritte umfaßt:

(a) Vorbereiten des stärkehaltigen Nahrungsmittels für die Verpackung durch:

(i) Erhitzen des Nahrungsmittels in überschüssigem kochendem Wasser bis es fertig gekocht ist, um einen Feuchtigkeitsgehalt von 60 Gew% bis 70 Gew% für Reis und einen Feuchtigkeitsgehalt von 75 Gew% bis 85 Gew% für Teigwaren zu erreichen,

(ii) Abtrennung des überschüssigen, kochenden Wassers von dem fertig gekochten, stärkehaltigen Nahrungsmittel,

(iii) Halten der Temperatur des fertig gekochten, stärkehaltigen Nahrungsmittels auf über etwa 82° C bis zur Verpackung,

(iv) Zugabe einer genießbaren Säure zu dem fertig gekochten, stärkehaltigen Nahrungsmittel in einer Menge, die ausreicht, um einen pH-Wert im Bereich von 3,5 bis 4,6 einzustellen, wobei die genießbare Säure aus Propionsäure, Milchsäure und Kombinationen dieser Säuren ausgewählt ist,

(v) Mischen der genießbaren Säure und des fertig gekochten, stärkehaltigen Nahrungsmittels über einen Zeitraum von 1 bis 3 Minuten, um die genießbare Säure gleichmäßig zu verteilen, und

(vi) Mischen eines genießbaren Gleitmittels mit der Mischung von genießbarer Säure und stärkehaltigem Nahrungsmittel, wobei das genießbare Gleitmittel aus Maisöl und ungesättigtem Färberdistelöl ausgewählt ist und in einer Menge von 1 Gew% bis 8 Gew% bezogen auf das Gewicht des stärkehaltigen Nahrungsmittels verwendet wird, und

(b) Abfüllen des nach Schritt (a) vorbereiteten stärkehaltigen Nahrungsmittels in einen Polyesterbeutel, der bei Temperaturen von 82°C und darüber gegen feuchte Hitze beständig ist und der im wesentlichen für atmosphärischen Sauerstoff undurchdringlich ist,

(c) Versiegeln des Polyesterbeutels während gleichzeitig Dampf aus dem vorbereiteten stärkehaltigen Nahrungsmittel freigesetzt wird, und

(d) Erhitzen des Inhalts des versiegelten Polyesterbeutels auf eine Temperatur über etwa 82°C, wobei der pH-Wert der stärkehaltigen Nahrungszusammensetzung in der Weise bestimmt wird, dass man eine 50 g-Probe der Nahrungszusammensetzung mit 50 g destilliertem Wasser in einem Mischer während etwa 1 Minute zu einem Brei Zerkleinert und den pH-Wert dieses Breis mit einem pH-Meter mißt.